# EUROPEAN PATENT SPECIFICATION

(11) **EP 2 070 208 B1**
(45) Date of publication and mention of the grant of the patent: **07.12.2016**
(21) Application number: 07852495.6
(22) Date of filing: 01.10.2007
(51) Int. Cl.: H04B 5/02

(54) **RADIO FREQUENCY IDENTIFICATION FAST TAG RESPONSE METHOD AND SYSTEM**
VERFAHREN UND SYSTEM FÜR SCHNELLE REAKTION VON RFID-ETIKETTEN
PROCÉDÉ ET SYSTÈME DE RÉPONSE RAPIDE D'ÉTIQUETTE D'IDENTIFICATION PAR RADIOFRÉQUENCE

(30) Priority: 29.09.2006 US 848094 P; 11.04.2007 US 786397
(43) Date of publication of application: 17.06.2009
(73) Proprietor: Tyco Fire & Security GmbH, 8212 Neuhausen am Rheinfall (CH)
(72) Inventor: ALICOT, Jorge F., Davie, FL 33331 (US); MCLAREN, Patrick, Pembroke Pines, FL 33024 (US)
(74) Representative: Hafner, Dieter
(86) International application number: PCT/US2007/021172
(87) International publication number: WO 2008/042380

(56) References cited:
- WO-A-2007/037956
- US-A1- 2002 063 622
- US-A1- 2007 069 864

## Description

### FIELD OF THE INVENTION

The present invention relates to field of radio frequency identification ("RFID") communications, and in particular to processing remote RFID communication device data.

### BACKGROUND OF THE INVENTION

Radio frequency identification ("RFID") systems are used in a wide variety of applications, and provide convenient mechanisms for the tracking, identification, and authentication of persons or objects. A RFID system typically includes one or more readers (also commonly referred to as interrogators) deployed at selected locations in an installation. Readers are typically deployed where it is desired to control or to receive information about objects or persons bearing or associated with RFID tags (also commonly referred to as markers or transponders). For example, readers may be deployed so as to cover entrances and exits, inventory control points, transaction terminals, and the like. Each reader is capable of receiving information from RFID tags with each tag typically being associated with an object or person. A tag may be affixed to or embedded in an object with which it is associated, or be part of a badge, card, or token given to a person. Signals conveyed between the tag and the reader, allow the reader to sense information on the tag. This information may include, for example, authentication or identification information, or may include instructions, such as a sequence of processes or operations to be conducted upon an object bearing the tag.

Each tag may include stored information that is communicated wirelessly to the reader. Tags typically carry information in onboard memory such as read only memory ("ROM") or nonvolatile programmable memory such as electrically erasable programmable read only memory ("EEPROM") and the amount of information may range from a single bit to kilobits or even more. Single bit tags typically serve as surveillance devices, such as theft prevention tags. Information amounting to a few bits or tens of bits may serve as an identifier, such as may be found in a badge or smart card, while information amounting to kilobits may comprise a portable data file that can be used for identification, communication, or control. The reader may, for example, extract information from a tag and use it for identification, or may store or convey the information to a responsible party. Alternatively, a data file may include a set of instructions that may initiate or control processes or actions without recourse to, or in coordination with, information stored elsewhere.

A tag typically includes a wireless communication device, for example a transmitter or transponder, which is capable of wirelessly communicating stored information to the reader. The tag may communicate the information independently or in response to a signal, such as an interrogation signal, received from the reader. Both active and passive tags are known in the art. An active tag has an onboard power source, while a passive tag may operate without an internal power source, deriving its operating power from a field generated by the reader. Passive tags are much lighter and less expensive than active tags and may offer a virtually unlimited operational lifetime. However, passive tags typically have shorter read ranges than active tags and require a higher-powered reader. Passive tags are also constrained in their capacity to store data and their ability to perform well in electromagnetically noisy environments.

A passive tag typically includes memory, which may be read only memory ("ROM") nonvolatile programmable memory such as electrically erasable programmable read only memory ("EEPROM"), or random access memory ("RAM"), depending on the applications to which the tag is to be put. Programmable memory used by a passive tag should be nonvolatile, so that data is not lost when the tag is in a powered down state. When the tag is not actively communicating with the reader, the tag is in a powered down state.

One commonly used implementation of a passive RFID tag includes analog or digital circuitry for processing signals received from and sent to the reader, as well as an antenna for communicating with a compatible reader, for example by electromagnetic coupling. The antenna may also be referred to as a coil. Communication through electromagnetic coupling typically involves superimposing the data upon a rhythmically varying field or carrier wave, which is, using the data to modulate the carrier wave. The carrier wave may suitably be a sinusoidal wave.

In order to receive data from a passive tag or transponder that communicates through electromagnetic coupling, the reader generates a magnetic field, typically using a reader antenna that electromagnetically couples to the transponder antenna. The magnetic field induces a voltage in the transponder antenna, thereby supplying power to the transponder. Data may suitably be transmitted to the reader by changing one parameter of the transmitting field. This parameter may be amplitude, frequency or phase.

The passive tag communicates with the reader by changing the load on the transmitting field. Load changes may suitably affect either the amplitude or phase of the field. These changes to the field are sensed by the reader antenna that produces a modulated current in response to the field. This current is analyzed, for example, demodulated, to extract the data, which is then used in ways called for by the design of the particular RFID system.

In some situations, the reader may transmit a command to a tag and receive no response within a set time period, no response at all, or receive a false or corrupted response. In these situations, the reader to tag data processing throughput is significantly reduced by the block processing of the received data signals by the reader. Since the reader does not know whether the response signal received is valid or invalid, the reader will process the response as it would any other received signal. In particular, a reader will typically receive the perceived response signal, attempt to demodulate the perceived response signal into an in-phase signal and a quadrature signal, which is typically 90 degrees out of phase with the in-phase signal. The typical reader will further attempt to digitize both the in-phase signal and the quadrature signal to generate digital data blocks or frames; and then finally fully decode the generated data block/frames in their entirety. This results in a great deal of inefficiency as the typical reader has to fully process the entire generated data block/frames to determine corrupted received signals.

US 2002/0063622 A1 teaches an RFID system and method for communicating between a host computer, one or more interrogators connected to the host computer, and a large body of transponders distributed within an area covered by the interrogators wherein the processor/controller processes data inputs looking for a valid preamble, break, and synch message reader. That processor then determines which channel date it will use for the duration of the message whereby the decision is made simply based on which channel accepts the synch portion of the message reader first. This strategy exploits a characteristic of the digital phase lock loop in which the digital discreet phase lock loop in the channel with the pure signal to noise ratio will lag the digital discreet phase lock loop in the channel with the higher signal to noise ratio.

WO 2007/037956 A2 teaches a method and apparatus for preamble synchronization in a wireless radio frequency identification RFID system wherein a plurality of samples are received in an input signal and the samples that occur between consecutive sign change the receive plurality of samples which are counted.

US 2007/0069864 A1 teaches an apparatus and method for receiving tag signals in a mobile RFID reader wherein tag signal receiving apparatus is provided that can perform digital Amplitude Shift Keying (ASK) demodulation onto signals received in a tag, decode the demodulated tag signal in synchronization and acquire tag data in a mobile RFID reader, and a method thereof. The tag signal receiving apparatus includes: a digital demodulating block for performing ASK demodulation onto a digital tag signal received through a reader antenna and converted into a digital tag signal in an analog-to-digital (AD) convener. The digital demodulating block includes a channel level comparator, a phase inverter, a signal converter, and an adder. The decoding block includes an edge information detector, a correlator, and a bit data decider.

There exists, therefore, a need for systems and techniques that will increase the reader to tag data processing for RFID systems.

### SUMMARY OF THE INVENTION

The present invention advantageously provides a method decoder and storage medium for processing radio frequency identification ("RFID") communication device data according to claims 1, 8 and 12, respectively.

In accordance with one aspect, the present invention provides a method for processing radio frequency identification ("RFID") communication device data that includes measuring an energy level of a RFID signal received on a first communication channel, measuring an energy level of the RFID signal received on a second communication channel, selecting the communication channel with the greater energy level, and acquiring data samples from the RFID signal received on the selected channel. The method for processing RFID communication device data can further include generating a preamble from a series of the acquired data samples.

In accordance with another aspect, the present invention provides a decoder for use in an RFID communication system that includes a receiver that is in communication with a first communication channel and a second communication channel, the first communication channel and the second communication channel receiving communication signals from a plurality of remote RFID communication devices, a selector that measures respective energy levels on the first communication channel and the second communication channel to select one of the first communication channel and the second communication channel based on the measured energy level, and decoding circuitry that decodes the communication signals received from the plurality of remote RFID communication devices.

In accordance with still another aspect, the present invention provides a storage medium storing a computer program which when executed by a processing unit performs a method for processing RFID communication device data that includes measuring an energy level of a RFID signal received on a first communication channel, measuring an energy level of an RFID signal received on a second communication channel, selecting the communication channel with the greater energy level, and acquiring data samples from the RFID signal received on the selected channel. The method for processing RFID communication device data can further include generating a preamble from a series of the acquired data samples.

### BRIEF DESCRIPTION OF THE DRAWINGS

A more complete understanding of the present invention, and the attendant advantages and features thereof, will be more readily understood by reference to the following detailed description when considered in conjunction with the accompanying drawings, wherein like designations refer to like elements, and wherein:
FIG. 1 is a block diagram of a communication system constructed in accordance with the principles of the present invention;
FIG. 2 is a block diagram of various aspects of the communication system of FIG. 1 constructed in accordance with the principles of the present invention;
FIG. 3 is a block diagram of the controller module and the RF module of an RFID reader constructed in accordance with the principles of the present invention;
FIG. 4A is a block diagram of a decoder module of a RFID reader constructed in accordance with the principles of the present invention;
FIG. 4B is a block diagram of a data frame for processing by the decoder module of FIG. 4A; and
FIG. 5 is a flowchart of a process to increase reader to tag data throughput in accordance with the principles of the present invention.

### DETAILED DESCRIPTION OF THE INVENTION

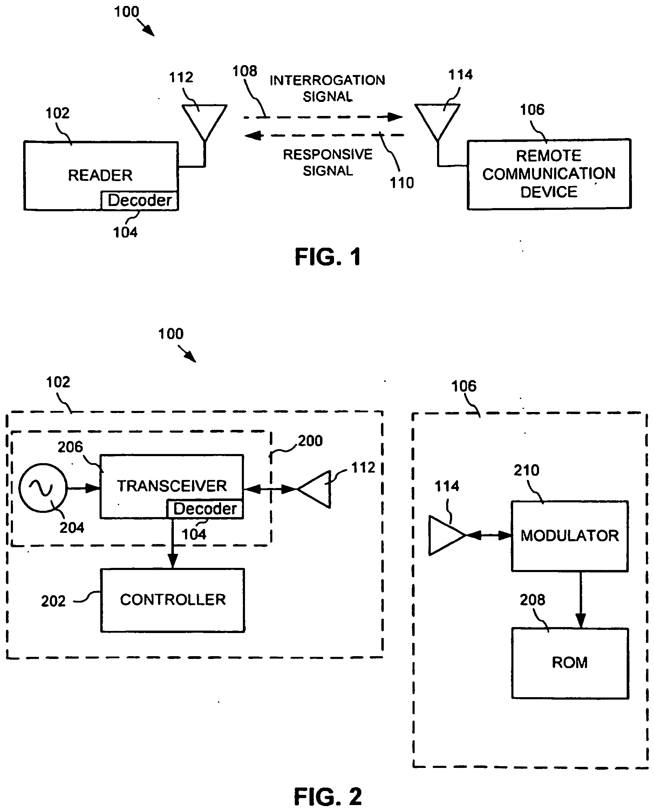

Referring now to the drawing figures in which like reference designators refer to like elements, there is shown in FIG. 1 a diagram of an exemplary system constructed in accordance with the principles of the present invention and designated generally as "100". Communication system 100 provides an electronic identification system in the embodiment described herein. Further, the described communication system 100 is configured for backscatter communications as described in detail below. Other communication protocols can be utilized in other embodiments.

The depicted communication system 100 includes at least one reader 102 having a decoder 104 and at least one electronic wireless remote communication device 106. Radio frequency ("RF") communications can occur between a reader 102 and remote communication devices 106 for use in identification systems and product monitoring systems as exemplary applications.

Devices 106 include radio frequency identification ("RFID") devices in the embodiments described herein. Multiple wireless remote communication devices 106 typically communicate with reader 102 although only one such device 106 is illustrated in FIG. 1.

Although multiple communication devices 106 can be employed in communication system 100, there is typically no communication between multiple devices 106 themselves. Instead, the multiple communication devices 106 communicate with reader 102. Multiple communication devices 106 can be used in the same field of reader 102, i.e., within the communication range of reader 102. Similarly, multiple readers 102 can be in proximity to one or more of devices 106.

Remote communication device 106 is configured to interface with reader 102 using a wireless medium in one embodiment. More specifically, communication between communication device 106 and reader 102 occur via an electromagnetic link, such as an RF link, e.g., at microwave frequencies in the described embodiment. Reader 102 is configured to output forward link wireless communication signals 108. Further, reader 102 is operable to receive return link wireless communication signals 110, e.g., a reply signal, from devices 106 responsive to the forward link communication signals 108. In accordance with the above, forward link communication signals and return link communication signals are wireless signals, such as radio frequency signals. Other forms of electromagnetic communication signals, such as infrared, acoustic, and the like are contemplated.

Reader unit 102 includes at least one antenna 112 as well as transmitting and receiving circuitry, similar to that implemented in devices 106. Antenna 112 comprises a transmit/receive antenna connected to reader 102. In an alternative embodiment, reader 102 can have separate transmit and receive antennas.

In operation, reader 102 transmits a forward link communication signal 108, e.g., an interrogation command signal, via antenna 112. Communication device 106 is operable to receive the incoming forward link signal 108. Upon receiving signal 108, communication device 106 responds by communicating the responsive return link communication signal 110, e.g., a responsive reply signal. Communications within system 10 are described in greater detail below.

In one embodiment, responsive return link communication signal 110, e.g., a responsive reply signal, is encoded with information that uniquely identifies or labels the particular device 106 that is transmitting so as to identify any object, animal, or person with which communication device 106 is associated. Communication devices 106 can be RFID tags that are attached to objects or people where each tag is programmed with information relating to the object or person to which it is attached. The information can take a wide variety of forms and can be more or less detailed depending on the needs to be served by the information. For example, the information may include merchandise identification information, such as a universal product code. A tag may include identifying information and security clearance information for an authorized person to whom the tag has been issued. A tag may also have a unique serial number, in order to uniquely identify an associated object or person. Alternatively, a tag may include more detailed information relating to an object or person, such as a complete description of the object or person. As a further exemplary alternative, a tag may store a single bit, in order to provide for theft control or simple tracking of entry and departure through the detection of an object or person at a particular reader, without necessarily specifically identifying the object or person.

Remote device 106 is configured to output a reply signal within reply link communication 110 responsive to receiving forward link wireless communication 108. Reader 102 is configured to receive and recognize the reply signal within the reply link communication signal 110, e.g., return signal. The reply signal can be utilized to identify the particular transmitting communication device 106 and may include various types of information corresponding to the communication device 106 including but not limited to stored data, configuration data or other command information.

An exemplary embodiment of a reader 102 is explained with reference to FIG. 2. In this embodiment, the reader 102 has a RF module or unit 200 and a controller module or unit 202. The RF module 200 includes a radio signal source 204 for synthesizing radio frequency signals, e.g., an interrogating RF signal, that outputs a RF signal to transceiver 206 of the reader 102. The interrogating RF signal from the source 204 uses a suitable frequency such as 915 MHz. When the radio signal source 204 is energized, transceiver 206 transmits the interrogating RF signal (typically after the RF signal has been modulated with an information signal) through antenna 112 to a suitable antenna 114 such as a dipole antenna at a communication device 106.

Modulated signals are received from communication device 106 via antenna 112 and passed to transceiver 206. Controller module 202 of reader 102 receives the digital equivalent of the modulated signal. In one embodiment, controller module 202 produces signals in a sequence having a pattern identifying the pattern of the 1's and 0's in read only memory ("ROM") 208 of communication device 106. For example, the received and processed sequence may be compared in reader 102 with a desired sequence to determine whether the object being identified is being sought by reader 102 or not.

Continuing to refer to FIG. 2, one embodiment of remote communication device 106 is explained. The depicted communication device 106 includes a modulator 210 having a receiver/transmitter as described below and a data source such as ROM 208, which provides a sequence of binary 1's and binary 0's in an individual pattern to identify the object. In this embodiment, a binary "1" in ROM 208 causes a modulator 210 to produce a first plurality of signal cycles and a binary "0" in ROM 208 causes the modulator 210 to produce a second plurality of signal cycles different from the first plurality of signals. The pluralities of signals cycles are sequentially produced by the modulator 210 to represent the pattern of binary 1's and binary 0's which identify the object are introduced to the dipole antenna 114 for transmission to antenna 112 at reader 102. In another embodiment, the communication device 106 can have separate receive and transmit antennas. Communication device 106 may further include an optional power source (not shown) connected to modulator 210 to supply operational power to modulator 210.

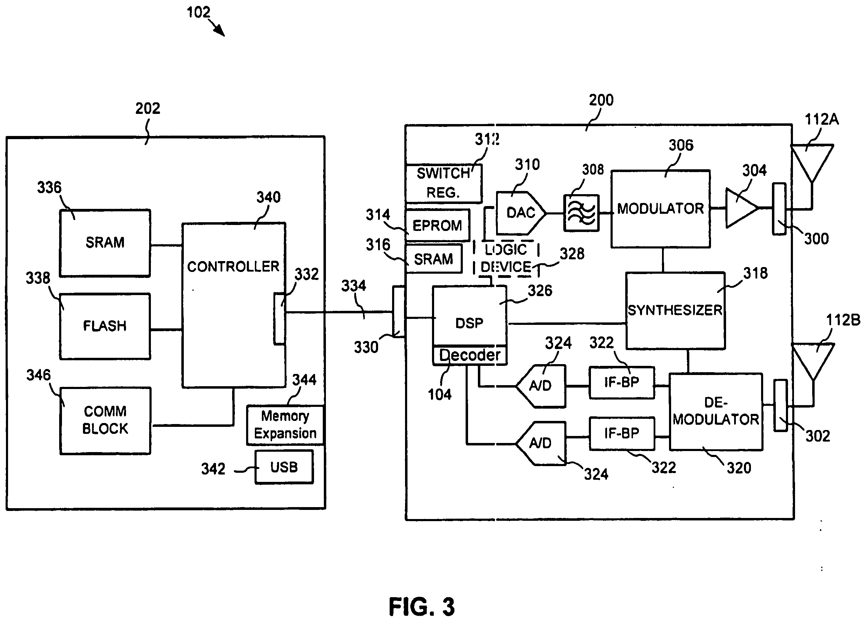

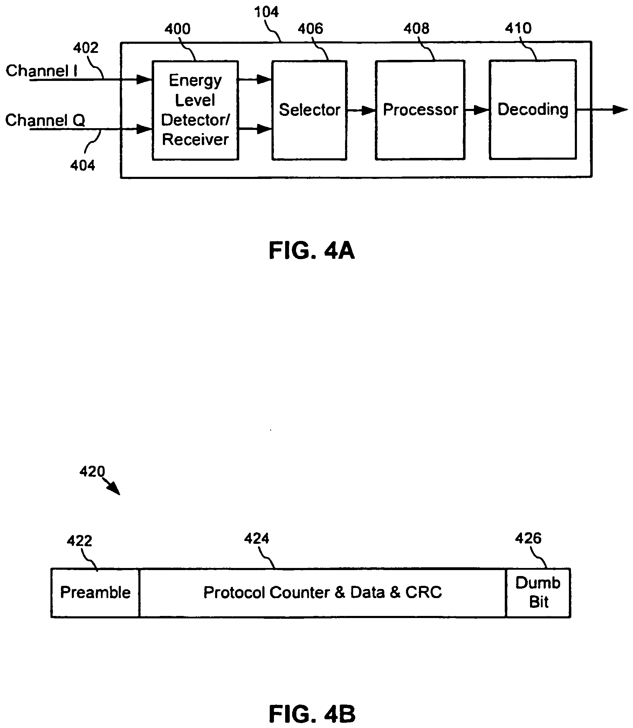

The exemplary embodiment of reader 102 in FIG. 2 is described in further detail with reference to FIG. 3. As shown in FIG. 3, the reader 102 includes a RF module or unit 200 and a controller processor module or unit 202. RF module 200 includes a signal-transmitting antenna 112A, a signal-receiving antenna 112B, a first RF interface 300, a second RF interface 302, a power amplifier 304, a modulator 306, a first band pass filter 308, a digital-to-analog converter ("DAC") 310, a switching regulator 312, an erasable programmable read-only memory ("EPROM") 314, a static random access memory ("SRAM") 316, a synthesizer 318, a demodulator 320, second and third band pass filters 322, analog-to-digital converters ("ADC") 324, a digital signal processor ("DSP") 326, a decoder 104, an optional logic device ("LD") 328 and a communication port 330. The synthesizer 318 transmits a reference signal to the modulator 306 and demodulator 320 that can be used to synchronize, filter and/or adjust the received communication signals with the transmitted communication signals. Decoder 104 provides for the acquisition and processing of the received communication signals, which are described in greater detail with reference to FIG. 4A.

The modulator 306 receives the reference signal from the synthesizer 318 and inquiry data from the DSP 326. Prior to any modulation, DAC 310 converts the inquiry data from the DSP 326 via logic device 328 from a digital signal into an analog signal and provides the converted analog signal to the band pass filter 308, which can restrict a frequency-band of the converted analog signal to a predetermined frequency band. Modulator 306 modulates the reference signal in accordance with the inquiry data, and outputs this modulated signal to the power amplifier 304. Optional logic device 328 can perform a command signal wave-shaping function of the RF module 200 in order to allow the DSP 326 to free up additional processing bandwidth to perform other RF module 200 functions.

Power amplifier 304 amplifies the modulated signal received from the modulator 306, and outputs this amplified signal to the first RF interface 300. Subsequently, signal-transmitting antenna 112A radiates the signal into air as radio-signals. Switching regulator 312 provides for the management of input power to the RF module 200.

Signal-receiving antenna 112B receives radio-signals, and passes the received radio-signals to the demodulator 320 via the second RF interface 302. The demodulator 320 extracts information from the received radio-signals and passes the extracted information signals and received radio-signals to the second and third bandpass filters 322, which may restrict a frequency-band of the extracted information signals and received radio-signals to a predetermined frequency band. The demodulator 320 can function as an I/Q receiver to provide two demodulated outputs which are the "I" output which is a result of product detecting the received signal against an in-phase local oscillator signal, while the "Q" output is a result of product detecting the received signal against a local oscillator signal with a phase shift of 90 degrees. The second and third bandpass filters 322 pass the restricted radio-signals to the analog-to-digital converters 324, which can convert the filtered radio-signals into digital signals for processing by the DSP 326.

Continuing to refer to FIG. 3, controller processor module 202 includes a communication port 332 to interface with communication port 330 of RF module 200 via a wireless or wired communication link 334. Controller processor module 202 further includes a SRAM 336, a flash memory 338, a controller processor 340, a universal serial bus ("USB") 342, a memory expansion module 344 and a communications block 346.

Controller processor 340 can be any of various commercially available central processing units, and it provides the communication and signal processing of controller processor module 202, including the communications with RF module 200 via the communication port 332. Controller processor 340 employs SRAM 336 and flash memory 338 for typical storage of communication data and the like, as well as providing resources for the operating system ("OS"), e.g., Linux/CE, of the controller processor module 202. Of course, the present invention is not limited to such and other forms of non-volatile memory, such as disk drives can be used. Memory expansion module 344 provides for expanding the controller processor module 202 to serve as an application processor. Communications block 346 provides an interface for accessing a communication link to a network, for example an Ethernet link or a wireless link.

FIG. 4A illustrates an exemplary decoder module or unit 104 of a RFID reader 102 constructed in accordance with the principles of the present invention. It should be noted that the decoder 104 illustrated in FIG. 4A is an exemplary decoder 104 that is used in a RFID interrogation system of the present invention and the invention disclosed herein is not limited to a particular design or type of decoder 104. Decoder module 104 includes an energy level detector/receiver 400 for detecting and receiving down converted signals, such as I output, from a demodulator 320 via a communication path such as first channel 402, e.g., "channel I", and Q output from second channel 404, e.g., "channel Q". Decoder module 104 can further include selector 406, processor 408 and decoding circuit 410. Analog to digital converters 324 (FIG. 3) can supply response signal samples for decoding on the first and second channels 402, 404 that are passed through the front-end filtering that may be a portion of energy level detector/receiver 400, selection switch 406 and processor 408 to decoding circuit 410. The signal samples can be digitized or hard limited by processor 408 and therefore converted into a high or low value based on a high/low threshold prior to the actual decoding of the signal samples by decoding circuit 410.

A series of signal samples can be processed one bit at a time to comprise all or portions of a protocol response frame such as frame 420 illustrated in FIG. 4B. Energy level detector/receiver 400 measures the energy levels of the first channel 402 and the second channel 404 and passes this information on to selector 406. Selector 406 determines which channel has the greater energy level and passes that channel's signal to processor 408, which filters and hard-limits the selected signal, prior to actual decoding by decoding circuit 410. This advantageously reduces the memory requirements since samples are acquired for one, instead of two channels, which in turn also increases the data throughput as a single channel is selected or chosen for potential processing and decoding. Selector 406 can be various types of comparators including but not limited to voltage or digital comparators. Decoder module 104 may include hardware, software, microcode and firmware or any combination thereof for processing the response signal samples on channel I and channel Q, as discussed more fully below. Although the processor 408 and decoding circuit 410 are shown as separate components in FIG. 4A, it is anticipated that these components could be integrated with each other or with energy level detector/receiver 400 and selection switch 406.

FIG. 4B illustrates an exemplary protocol response frame 420 of information received by the decoder 104 from RFID communication devices 106. In this embodiment, frame 420 includes a preamble field 422, which is typically 6 bits wide, a protocol counter string, e.g., random number 16 bits ("RN16"), data and cyclic redundancy check ("CRC") field 424, and a dumb bit field 426. CRC is a type of hash function used to produce a checksum, which is a small, fixed number of bits, against a block of data.

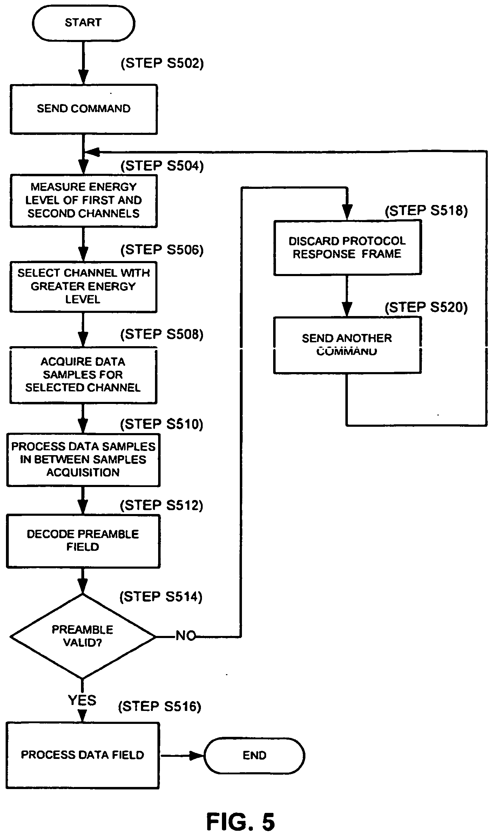

FIG. 5 illustrates an exemplary flowchart of a process to increase tag data throughput according an aspect of the present invention. At step S502, a reader 102 sends a command to the remote communication devices 106, e.g., RFID tags. The reader 102 receives a response or at least what the reader 102 considers to be a response at the receiver 400, and measures an energy level on a first channel 402 and a second channel 404 (step S504). There are various ways that the energy levels may be determined including the use of a sampling technique for the two channels, e.g., channel I and channel Q. Although the measuring of energy levels in the first and second channels occurs simultaneously in step S504, the measuring may occur separately and in any order. Once the energy levels are measured for the first 402 and second 404 channels, the energy levels are compared and the channel with the greater energy level (and its frame of samples) is chosen by selector 406 for further possessing (step S506). This advantageously increases the processing of the communication data as the samples are acquired for one, instead of two channels. At step S508, data samples for the selected or chosen channel are acquired. In this embodiment, the data samples are processed during the time periods between sample acquisitions (step S510). This processing of data samples during the periods of time between sample acquisitions is referred to as in-line processing and improves communication throughput because data is decoded between samples, and the decoding is performed on a portion of the received data block or frame 420 instead of the entire received data block or frame 420.

Prior to performing traditional full block type filtering on the selected channel communication with data frame 420, preamble 422 (or another field or portion) of the selected frame is decoded at step S512. Preamble field 422 is analyzed or checked and a determination of whether preamble 422 is valid is made at step S514. If preamble 422 is valid, then the data field of the protocol response frame 420 is processed at step S516. Otherwise, at step S518, the protocol response frame 420 is discarded and another command is transmitted to the tags 106 by the RFID reader 102 (step S520). For example, the previous command requesting status from a selected tag with an ID may be retransmitted or another tag ID may be selected for data processing.

As previously referenced, decoder 104 may include hardware, software, microcode and firmware or any combination thereof for processing the response signals on channel I and channel Q and for selecting which channel to process. For example, an analog-to-digital converter ("ADC") may be configured to respond to the above algorithm for selecting either decoder "channel I" input or decoder "channel Q" input for further processing.

Significant processing is saved by testing the integrity of the received communication signal prior to performing signal processing on a received signal, as filtering and signal conversion require consume a fairly substantial amount of processing resources.

The present invention provides a method for improved processing of RFID tag data by determining received data integrity prior to signal block processing.

It will be appreciated by persons skilled in the art that the present invention is not limited to what has been particularly shown and described herein above. In addition, unless mention was made above to the contrary, it should be noted that all of the accompanying drawings are not to scale. A variety of modifications and variations are possible in light of the above teachings without departing from the scope of the invention, which is limited only by the following claims.

## Claims

1. A method for processing radio frequency identification, RFID, communication device data, the method comprising:
measuring an energy level of a RFID signal received on a first communication channel (402);
measuring an energy level of the RFID signal received on a second communication channel (404);
**characterized in that**
selecting the communication channel with the higher energy level; and
acquiring data samples from the RFID signal received on the selected channel, wherein acquiring data samples from the RFID signal received on the selected channel includes applying a threshold value to determine a logical state of at least one of the acquired data samples.

2. The method of Claim 1, further comprising generating a preamble (422) from a series of the acquired data samples.

3. The method of Claim 2, wherein generating a preamble (422) from a series of the acquired data samples occurs during periods of time between acquiring data samples.

4. The method of Claim 2, further comprising testing data integrity of the preamble (422).

5. The method of Claim 4, if it is determined that the preamble (422) is valid, processing a data frame associated with the preamble (422).

6. The method of Claim 4, if it is determined that the preamble (422) is invalid, discarding a data frame associated with the preamble (422).

7. The method of Claim 6, further comprising receiving another command (S520) from the first communication channel (402) and the second communication channel (404).

8. A decoder (104) for use in an RFID communication system, the decoder (104) comprising:
a receiver (102) in communication with a first communication channel (402) and a second communication channel (404), the first communication channel (402) and the second communication channel (404) receiving communication signals from a plurality of remote RFID communication devices (106);
**characterized in that**
a selector, the selector measuring respective energy levels on the first communication channel (402) and the second communication channel (404), the selector selecting the communication channel (402) with the higher energy level;
means for acquiring data samples from the RFID signal received on the selected channel, wherein the means apply a threshold value to determine a logical state of at least one of the acquired data samples; and
decoding circuitry, the decoding circuitry decodes the communication signals received from the plurality of remote RFID communication devices (106).

9. The decoder of Claim 8, further comprising front-end filtering circuitry (322) for filtering the communication signals received from the plurality of remote RFID communication devices (106).

10. The decoder of Claim 8, wherein the communication signals comprise at least a portion of a data block (420), the portion of the data block (420) used to determine whether to decode the complete data block (420).

11. The decoder of Claim 10, wherein the selector is one of a) a voltage comparator and b) a digital comparator.

12. A storage medium storing a computer program which when executed by a processing unit performs a method for processing radio frequency identification, RFID, communication device data, the method comprising:
measuring an energy level of a RFID signal received on a first communication channel (402);
measuring an energy level of the RFID signal received on a second communication channel (404);
**characterized in**
selecting the communication channel (402, 404) with the higher energy level; and
acquiring data samples from the RFID signal received on the selected channel (402, 404), and wherein acquiring data samples from the RFID signal received on the selected channel (402, 404) includes applying a threshold value to determine a logical state of at least one of the acquired data samples.

13. The storage medium of Claim 12, further comprising generating a preamble (422) from a series of the acquired data samples.

14. The storage medium of Claim 13, wherein generating a preamble (422) from a series of the acquired data samples occurs during periods of time between acquiring data samples.

## Patentansprüche

1. Verfahren zum Verarbeiten von Hochfrequenzidentifizierungs-Kommunikationsvorrichtungs-Daten, RFID-Kommunikationsvorrichtungs-Daten, wobei das Verfahren Folgendes umfasst:
Messen eines Energiepegels eines auf einem ersten Kommunikationskanal (402) empfangenen RFID-Signals;
Messen eines Energiepegels des auf einem zweiten Kommunikationskanal (404) empfangenen RFID-Signals;
**gekennzeichnet durch**
Auswählen des Kommunikationskanals mit dem höheren Energiepegel; und
Erfassen von Datenabtastwerten von dem auf dem ausgewählten Kanal empfangenen RFID-Signal, wobei das Erfassen von Datenabtastwerten von dem auf dem ausgewählten Kanal empfangenen RFID-Signal das Anwenden eines Schwellenwerts zum Bestimmen eines Logikzustands wenigstens eines der erfassten Datenabtastwerte enthält.

2. Verfahren nach Anspruch 1, das ferner das Erzeugen einer Präambel (422) aus einer Folge der erfassten Datenabtastwerte umfasst.

3. Verfahren nach Anspruch 2, wobei das Erzeugen einer Präambel (422) aus einer Folge der erfassten Datenabtastwerte während Zeitdauern zwischen dem Erfassen von Datenabtastwerten stattfindet.

4. Verfahren nach Anspruch 2, das ferner das Prüfen der Datenintegrität der Präambel (422) umfasst.

5. Verfahren nach Anspruch 4, wobei ein der Präambel (422) zugeordneter Datenrahmen verarbeitet wird, falls bestimmt wird, dass die Präambel (422) gültig ist.

6. Verfahren nach Anspruch 4, wobei ein der Präambel (422) zugeordneter Datenrahmen verworfen wird, falls bestimmt wird, dass die Präambel (422) ungültig ist.

7. Verfahren nach Anspruch 6, das ferner das Empfangen eines weiteren Befehls (S520) von dem ersten Kommunikationskanal (402) und von dem zweiten Kommunikationskanal (404) umfasst.

8. Decodierer (104) zur Verwendung in einem RFID-Kommunikationssystem, wobei der Decodierer (104) Folgendes umfasst:
einen Empfänger (102) in Kommunikation mit einem ersten Kommunikationskanal (402) und mit einem zweiten Kommunikationskanal (404), wobei der erste Kommunikationskanal (402) und der zweite Kommunikationskanal (404) Kommunikationssignale von mehreren fernen RFID-Kommunikationsvorrichtungen (106) empfangen;
**gekennzeichnet durch**
eine Auswahleinrichtung, wobei die Auswahleinrichtung Energiepegel auf dem ersten Kommunikationskanal (402) bzw. auf dem zweiten Kommunikationskanal (404) misst, wobei die Auswahleinrichtung den Kommunikationskanal (402) mit dem höheren Energiepegel auswählt;
Mittel zum Erfassen von Datenabtastwerten von dem auf dem ausgewählten Kanal empfangenen RFID-Signal, wobei die Mittel einen Schwellenwert anwenden, um einen Logikzustand wenigstens eines der erfassten Datenabtastwerte zu bestimmen; und
eine Decodierungsschaltungsanordnung, wobei die Decodierungsschaltungsanordnung die von den mehreren fernen RFID-Kommunikationsvorrichtungen (106) empfangenen Kommunikationssignale decodiert.

9. Decodierer nach Anspruch 8, der ferner eine Eingangs-Filterungsschaltungsanordnung (322) zum Filtern der von den mehreren fernen RFID-Kommunikationsvorrichtungen (106) empfangenen Kommunikationssignale umfasst.

10. Decodierer nach Anspruch 8, wobei die Kommunikationssignale wenigstens einen Abschnitt eines Datenblocks (420) umfassen, wobei der Abschnitt des Datenblocks (420) dafür verwendet wird zu bestimmen, ob der vollständige Datenblock (420) zu decodieren ist.

11. Decodierer nach Anspruch 10, wobei die Auswahleinrichtung a) ein Spannungskomparator oder b) ein digitaler Komparator ist.

12. Speichermedium, das ein Computerprogramm speichert, das, wenn es durch eine Verarbeitungseinheit abgearbeitet wird, ein Verfahren zum Verarbeiten von Hochfrequenzidentifizierungs-Kommunikationsvorrichtungs-Daten, RFID-Kommunikationsvorrichtungs-Daten, ausführt, wobei das Verfahren Folgendes umfasst:
Messen eines Energiepegels eines auf einem ersten Kommunikationskanal (402) empfangenen RFID-Signals;
Messen eines Energiepegels des auf einem zweiten Kommunikationskanal (404) empfangenen RFID-Signals;
**gekennzeichnet durch**
Auswählen des Kommunikationskanals (402, 404) mit dem höheren Energiepegel; und
Erfassen von Datenabtastwerten von dem auf dem ausgewählten Kanal (402, 404) empfangenen RFID-Signal, wobei das Erfassen von Datenabtastwerten von dem auf dem ausgewählten Kanal (402, 404) empfangenen RFID-Signal das Anwenden eines Schwellenwerts zum Bestimmen eines Logikzustands wenigstens eines der erfassten Datenabtastwerte enthält.

13. Speichermedium nach Anspruch 12, das ferner das Erzeugen einer Präambel (422) aus einer Folge der erfassten Datenabtastwerte umfasst.

14. Speichermedium nach Anspruch 13, wobei das Erzeugen einer Präambel (422) aus einer Folge der erfassten Datenabtastwerte während Zeitdauern zwischen dem Erfassen von Datenabtastwerten stattfindet.

## Revendications

1. Procédé de traitement de données de dispositif de communication d'identification radiofréquence, RFID, lequel procédé consiste à :
- mesurer un niveau d'énergie d'un signal RFID reçu sur un premier canal de communication (402) ;
- mesurer un niveau d'énergie du signal RFID reçu sur un second canal de communication (404) ;
**caractérisé en ce qu'**il consiste à :
- choisir le canal de communication ayant le niveau d'énergie le plus élevé ; et
- acquérir des échantillons de données à partir du signal RFID reçu sur le canal choisi, l'acquisition d'échantillons de données à partir du signal RFID reçu sur le canal choisi consistant à appliquer une valeur seuil pour déterminer un état logique d'au moins un des échantillons de données acquis.

2. Procédé selon la revendication 1, consistant en outre à générer un préambule (422) à partir d'une série d'échantillons de données acquis.

3. Procédé selon la revendication 2, dans lequel la génération d'un préambule (422) à partir d'une série d'échantillons de données acquis se produit pendant des périodes de temps entre l'acquisition d'échantillons de données.

4. Procédé selon la revendication 2, consistant en outre à tester l'intégrité des données du préambule (422).

5. Procédé selon la revendication 4, consistant à, s'il est déterminé que le préambule (422) est valide, traiter une trame de données associée au préambule (422).

6. Procédé selon la revendication 4, consistant à, s'il est déterminé que le préambule (422) est invalide, rejeter une trame de données associée au préambule (422).

7. Procédé selon la revendication 6, consistant en outre à recevoir une autre instruction (S520) depuis le premier canal de communication (402) et le second canal de communication (404).

8. Décodeur (104) utilisé dans un système de communication RFID, lequel décodeur (104) comprend :
un récepteur (102) en communication avec un premier canal de communication (402) et un second canal de communication (404), le premier canal de communication (402) et le second canal de communication (404) recevant des signaux de communication depuis plusieurs dispositifs de communication RFID (106) distants ;
**caractérisé par** :
- un sélecteur, le sélecteur mesurant des niveaux d'énergie respectifs sur le premier canal de communication (402) et le second canal de communication (404), et le sélecteur choisissant le canal de communication (402) ayant le niveau d'énergie le plus élevé ;
- des moyens pour acquérir des échantillons de données à partir du signal RFID reçu sur le canal choisi, lesquels moyens appliquent une valeur seuil pour déterminer un état logique d'au moins un des échantillons de données acquis ; et
- un circuit de décodage, lequel circuit de décodage décode les signaux de communication reçus desdits plusieurs dispositifs de communication RFID (106) distants.

9. Décodeur selon la revendication 8, comprenant en outre un circuit de filtrage d'extrémité avant (322) pour filtrer les signaux de communication reçus desdits plusieurs dispositifs de communication RFID (106) distants.

10. Décodeur selon la revendication 8, dans lequel les signaux de communication comprennent une partie au moins d'un bloc de données (420), la partie du bloc de données (420) étant utilisée pour déterminer s'il faut décoder le bloc de données (420) complet.

11. Décodeur selon la revendication 10, dans lequel le sélecteur est l'un d'un a) comparateur de tension et b) d'un comparateur numérique.

12. Support de stockage stockant un programme informatique qui, lorsqu'il est exécuté par une unité de traitement, effectue un procédé de traitement de données de dispositif de communication d'identification radiofréquence, RFID, lequel procédé consiste à :
- mesurer un niveau d'énergie d'un signal RFID reçu sur un premier canal de communication (402) ;
- mesurer un niveau d'énergie du signal RFID reçu sur un second canal de communication (404) ; **caractérisé en ce qu'**il consiste à :
- choisir le canal de communication (402, 404) ayant le niveau d'énergie le plus élevé ; et
- acquérir des échantillons de données à partir du signal RFID reçu sur le canal choisi (402, 404), l'acquisition d'échantillons de données à partir du signal RFID reçu sur le canal choisi (402, 404) consistant à appliquer une valeur seuil pour déterminer un état logique d'au moins un des échantillons de données acquis.

13. Support de stockage selon la revendication 12, consistant en outre à générer un préambule (422) à partir d'une série d'échantillons de données acquis.

14. Support de stockage selon la revendication 13, dans lequel la génération d'un préambule (422) à partir d'une série d'échantillons de données acquis se produit pendant des périodes de temps entre l'acquisition d'échantillons de données.
